# EUROPÄISCHE PATENTANMELDUNG

(11) **EP 4 304 051 A1**
(43) Veröffentlichungstag der Anmeldung: **10.01.2024**
(21) Anmeldenummer: 22183285.0
(22) Anmeldetag: 06.07.2022
(51) Int. Cl.: H02K 1/14

(54) **STATOR MIT STECKBAREN ZÄHNEN**

(71) Anmelder: Hilti Aktiengesellschaft, 9494 Schaan (LI)
(72) Erfinder: Asmus, Torsten, 87600 Kaufbeuren (DE); Ruff, Christian, 86391 Stadtbergen (DE); Steentjes, Simon, 86807 Buchloe (DE)
(74) Vertreter: Hilti Aktiengesellschaft Corporate Intellectual Property

(57) **Zusammenfassung**

Stator für einen Elektromotor enthaltend wenigstens eine erste und zweite Zahneinrichtung zur jeweiligen Aufnahme einer Spulenwicklung.

Jede Zahneinrichtung enthält einen bogenförmigen ersten und zweiten Ringabschnitt. Der erste Ringabschnitt weist einen längeren Kreisbogen auf als der zweite Ringabschnitt, wobei eine Verbindungsvorrichtung mit einem ersten und zweiten Verbindungselement enthalten ist, und wobei das erste Verbindungselement an dem ersten Ringabschnitt und das zweite Verbindungselement an dem zweiten Ringabschnitt vorgesehen.

Elektromotor mit einem Stator enthaltend wenigstens eine erste und zweite Zahneinrichtung zur jeweiligen Aufnahme einer Spulenwicklung.

## Beschreibung

Die vorliegende Erfindung betrifft einen Stator für einen Elektromotor enthaltend wenigstens eine erste und zweite Zahneinrichtung zur jeweiligen Aufnahme einer Spulenwicklung.

Des Weiteren betrifft die vorliegende Erfindung einen Elektromotor mit einem Stator enthaltend wenigstens eine erste und zweite Zahneinrichtung zur jeweiligen Aufnahme einer Spulenwicklung.

Statoren als ein Bestandteil für Elektromotoren gemäß dem Stand der Technik weisen im Wesentlichen ein Ringelement sowie ein Anzahl an Zahnelementen auf. Die Zahnelemente erstrecken sich dabei von einer inneren Mantelfläche des Ringelements zu einem Mittelpunkt des Ringelements. An den freien Ende der Zahnelemente verbleibt ein kreisförmiger Freiraum für einen Rotor. Jedes Zahnelement dient zum Aufnehmen und Halten einer Wickelspule auf leitfähigem Spulendraht zum entsprechenden Erzeugen eines Magnetfeldes.

Insbesondere bei kleinen Statoren ist die Umwicklung der einzelnen Zahnelemente mit einem Spulendraht für gewöhnlich mit einem hohen technischen Aufwand verbunden. Der zur Verfügung stehende Raum zwischen benachbarten Zahnelementen ist häufig eng bemessen, sodass eine schnelles und vor allem ordentliches Wickeln einer Spule um ein Zahnelement viel Zeit, eine aufwendige Wickelvorrichtung sowie hohe Kosten erzeugt.

Es ist damit Aufgabe der vorliegenden Erfindung das vorstehend beschriebene Problem zu lösen.

Die Aufgabe wird gelöst durch den Gegenstand des unabhängigen Patentanspruchs 1 und 10. Vorteilhafte Ausführungsformen des jeweiligen erfindungsgemäßen Gegenstands sind in den abhängigen Patentansprüchen enthalten.

Die Aufgabe wird insbesondere gelöst durch einen Stator für einen Elektromotor enthaltend wenigstens eine erste und zweite Zahneinrichtung zur jeweiligen Aufnahme einer Spulenwicklung.

Erfindungsgemäß ist vorgesehen, dass jede Zahneinrichtung einen bogenförmigen ersten und zweiten Ringabschnitt enthält, und dass der erste Ringabschnitt einen längeren Kreisbogen aufweist als der zweite Ringabschnitt, wobei eine Verbindungsvorrichtung mit einem ersten und zweiten Verbindungselement enthalten ist, wobei das erste Verbindungselement an dem ersten Ringabschnitt und das zweite Verbindungselement an dem zweiten Ringabschnitt vorgesehen. Hierdurch können einzelne Zahnelemente mit einer Spulenwicklung versehen werden, sodass anschließend die einzelnen Zahnelemente mit der fertigen Spulenwicklung zu einem vollständigen Stator zusammengesetzt werden können.

Gemäß einer alternativen Ausführungsform kann es möglich sein, dass das Volumen des zweiten Ringabschnitts im Wesentlichen 1/3 oder 30% des Volumens des ersten Ringabschnitts entspricht. Hierdurch kann eine asymmetrisches Längenverhältnis bzw. Kreisbogenlängenverhältnis zwischen dem ersten und zweiten Ringabschnitt erzeugt werden. Alternativ kann das Volumen des zweiten Ringabschnitts im Wesentlichen auch weniger als 1/3 oder 30% des Volumens des ersten Ringabschnitts entsprechen.

Die zur Unterteilung der Zahnelemente erforderlichen Trennlinien der Verbindungsstellen beeinträchtigen den magnetischen Kreis sowie den strukturellen Zusammenhalt des Stators insgesamt. Dies kann sich nachteilig auf die Leistungsdichte, Stabilität und/oder das Geräuschverhalten des gesamten Elektromotors auswirken. Insbesondere bei als Stanzkanten ausgeprägten Trennlinien ist deren negativer Einfluss auf die elektromagnetischen Eigenschaften eines Statorbleches zu berücksichtigen.

Zur Minimierung dieser Nachteile hat es sich als vorteilhaft bewiesen, dass entsprechend einer weiteren alternativen Ausführungsform wenigstens eine erste Verbindungsstelle des ersten und zweiten Verbindungselements im Wesentlichen in einer Ebene durch eine Zahneinrichtung liegt. Hierdurch kann ein Bereich des magnetischen Kreises durch den Stator mit einer hohen magnetischen Flussdichte in radialer Erstreckung eines Zahnelements liegen, wodurch der magnetische Fluss optimiert wird.

Gemäß einer alternativen Ausführungsform kann es möglich sein, dass das erste und zweite Verbindungselement in einem geschlossenen Zustand wenigstens eine formschlüssige, kraftschlüssige und/oder stoffschlüssige Verbindung zueinander erzeugen. Hierdurch kann auf einfache Art und Weise eine Verbindung der Verbindungselemente erreicht werden. Es ist dabei möglich, dass neben einer mechanischen Verbindung, d.h. formschlüssige oder kraftschlüssige Verbindung, auch eine stoffschlüssige Verbindung in Form eines Klebstoffes zwischen den angrenzenden Ringabschnitten vorgesehen ist.

Entsprechend einer weiteren alternativen Ausführungsform kann es möglich sein, dass die Verbindungsvorrichtung als Schnappverbindung ausgestaltet ist. Hierdurch kann auf einfache Art und Weise eine verlässliche und wiederlösbare Verbindung der Verbindungselemente erreicht werden.

Gemäß einer alternativen Ausführungsform kann es möglich sein, dass die Verbindungsvorrichtung als Fügeverbindung ausgestaltet ist. Hierdurch kann auf einfache Art und Weise eine wiederlösbare Verbindung der Verbindungselemente erreicht werden, welche keine elastische Verformbarkeit der Verbindungselemente oder Teile der Verbindungselemente erfordert. Zu wiederlösbaren Verbinden oder Trennen können die Verbindungselemente einfach in einer Statorachse gegeneinander bzw. relativ zueinander verschoben werden.

Entsprechend einer weiteren alternativen Ausführungsform kann es möglich sein, dass wenigstens eine erste Trennlinie der Fügeverbindung zwischen dem ersten und zweiten Verbindungselement parallel zu einer Mittelachse des Stators verläuft, sodass das erste und zweite Verbindungselement gegeneinander und parallel zur Mittelachse des Stators verschiebbar sind. Hierdurch kann auf einfache Art und Weise eine relativ sichere bzw. belastbare Verbindung der Verbindungselemente erreicht werden.

Gemäß einer alternativen Ausführungsform kann es möglich sein, dass die Wegstrecke der Trennlinie der Fügeverbindung zwischen dem ersten und zweiten Verbindungselement länger ist als eine Breite einer Zahneinrichtung. Hierdurch ergibt sich eine möglichst lange Verbindungslinie bzw. Trennlinie zwischen angrenzenden Verbindungselementen, wodurch der magnetische Fluss zwischen diesen zueinander angrenzenden Verbindungselementen wenig negativ beeinträchtigt wird.

Entsprechend einer weiteren alternativen Ausführungsform kann es möglich sein, dass zwischen dem ersten und zweiten Verbindungselement ein elastisch oder plastisch verformbares Kontaktelement vorgesehen ist. Hierdurch kann auf einfache Art und Weise eine verlässliche bzw. zuverlässige Schnappverbindung zwischen angrenzenden Verbindungselementen sowie ein Herausnehmen einer einzelnen Zahneinrichtung auf einem Statorverbund erreicht werden.

Die Aufgabe wird es Weiteren gelöst durch einen Elektromotor mit einem Stator enthaltend wenigstens eine erste und zweite Zahneinrichtung zur jeweiligen Aufnahme einer Spulenwicklung.

Erfindungsgemäß ist vorgesehen, dass jede Zahneinrichtung einen bogenförmigen ersten und zweiten Ringabschnitt enthält, und dass der erste Ringabschnitt einen längeren Kreisbogen aufweist als der zweite Ringabschnitt, wobei eine Verbindungsvorrichtung mit einem ersten und zweiten Verbindungselement enthalten ist, wobei das erste Verbindungselement an dem ersten Ringabschnitt und das zweite Verbindungselement an dem zweiten Ringabschnitt vorgesehen.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine mit einem Antrieb gemäß einer bespielhaften Ausführungsform;
- Figur 2: eine perspektivische Seitenansicht auf einen Stator und Rotor als Bestandteil des Antriebs;
- Figur 3: eine perspektivische Seitenansicht auf den Stator gemäß einer bespielhaften Ausführungsform;
- Figur 4: eine Vorderansicht auf den Stator gemäß der bespielhaften Ausführungsform; und
- Figur 5: eine Detailansicht des Stators mit Zahneinrichtungen sowie bogenförmigen ersten und zweiten Ringabschnitten.

### Ausführungsbeispiele:

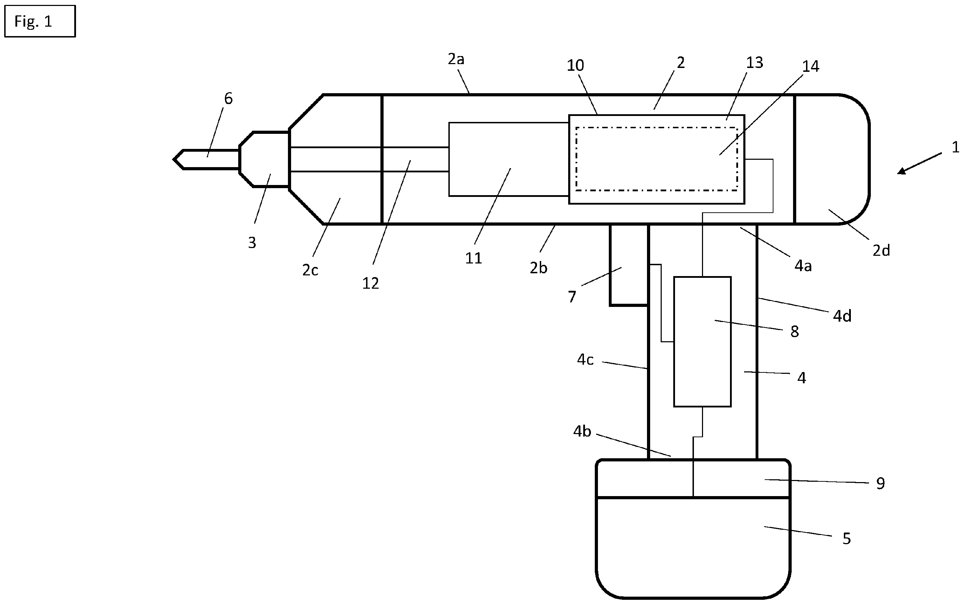

Figur 1 zeigt eine Werkzeugmaschine 1 in Form eines Akku-Schraubers gemäß einer bespielhaften Ausführungsform.

Alternativ kann die Werkzeugmaschine 1 auch in Form eines Bohrhammer, Kombihammer, Bohrmaschine, Säge, Schleifgeräts oder dergleichen ausgestaltet sein.

Wie in Figur 1 gezeigt, enthält die Werkzeugmaschine 1 gemäß der bespielhaften Ausführungsform im Wesentlichen ein Gehäuse 2, eine Werkzeugaufnahme 3, einen Handgriff 4 und eine Energieversorgung 5.

Das Gehäuse 2 weist eine Oberseite 2a, eine Unterseite 2b, ein vorderes Ende 2c und ein hinteres Ende 2d auf.

An dem vorderen Ende 2c des Gehäuses 2 ist die Werkzeugaufnahme 3 positioniert, die zum Aufnehmen und Halten eines Werkzeuges 6 dient. In dem vorliegenden Fall ist das Werkzeug 6 als Schrauber-Bit (oder nur Bit genannt) ausgestaltet.

Der Handgriff 4 dient zum Halten und Führen der Werkzeugmaschine 1 durch einen (in den Figuren nicht gezeigten) Anwender. Der Handgriff 4 weist ein oberes Ende 4a, ein unteres Ende 4b, eine Vorderseite 4c und eine Rückseite 4d auf. Das obere Ende 4a des Handgriffs 4 ist mit der Unterseite 2b des Gehäuses 2 der Werkzeugmaschine 1 verbunden.

Wie Figur 1 erkennbar, ist an der Vorderseite 4c des Handgriffs 4 ein Betätigungsschalter 7 positioniert. Der Betätigungsschalter 7 dient zum Aktivieren der Werkzeugmaschine 1. Im Inneren des Handgriffs 4 ist eine Steuerungseinrichtung 8 der Werkzeugmaschine 1 positioniert und dient zum Steuern sowie Regeln der Funktionen der Werkzeugmaschine 1.

An der Unterseite 2b des Gehäuses 2 der Werkzeugmaschine 1 ist eine Fussvorrichtung 8 mit einer Werkzeugmaschinenschnittstelle 9 vorgesehen. Die Werkzeugmaschinenschnittstelle 9 dient zum wiederlösbaren Verbinden der Werkzeugmaschine 1 mit der Energieversorgung 5.

Die Energieversorgung 5 ist in der vorliegenden Ausführungsform als Akkumulator ausgestaltet. Gemäß einer alternativen und in den Figuren nicht gezeigten Ausführungsform kann die Energieversorgung 5 auch als Stromkabel zum wiederlösbaren Verbinden der Werkzeugmaschine 1 mit einer Netzstromquelle (auch Steckdose genannt) ausgestaltet sein.

Im Inneren des Gehäuses 2 der Werkzeugmaschine 1 ist des Weiteren ein Antrieb 10, eine Getriebevorrichtung 11 sowie eine Antriebswelle 12 vorgesehen. Der Antrieb 10 ist in dem vorliegenden Ausführungsbeispiel als Elektromotor ausgestaltet und dient zum Erzeugen eines Drehmoments. Der als Elektromotor ausgestaltete Antrieb 10, die Getriebevorrichtung 11 und die Antriebswelle 12 sind dabei so zueinander in dem Gehäuse 2 angeordnet bzw. positioniert, dass ein von dem Antrieb 10 erzeugtes Drehmoment über die Getriebevorrichtung 11, die Antriebswelle 12 und schließlich auf die Werkzeugaufnahme 3 übertragen werden kann.

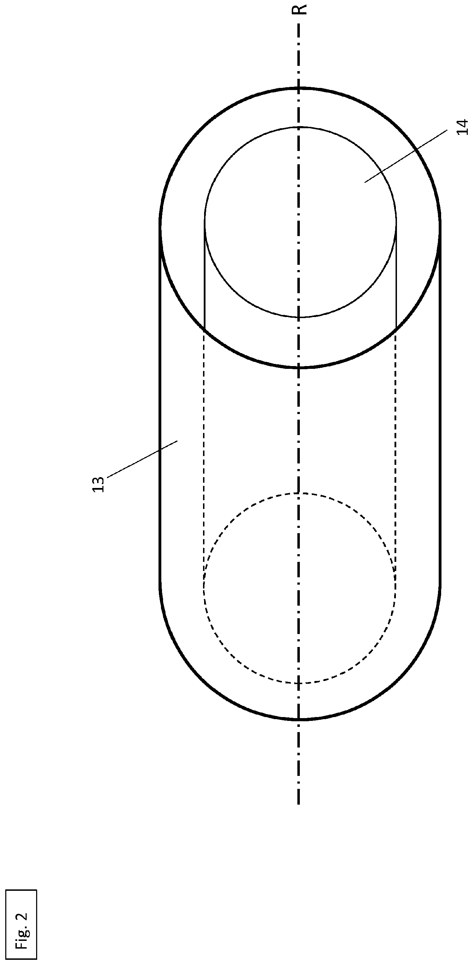

Der Antrieb 10 enthält wiederum im Wesentlichen einen Stator 13 und einen in dem Stator 13 positionierten und relativ zu dem Stator 13 drehbaren Rotor 14, vgl. Figur 2. Der Rotor 14 dreht sich dabei um eine Mittelachse MA des Stators 13.

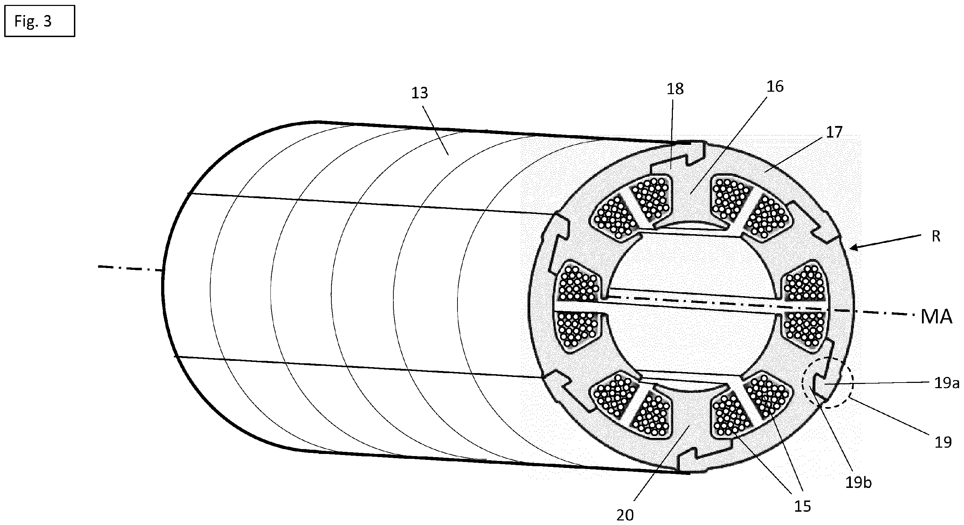

Wie in Figur 3 bis 5 ersichtlich, enthält der Stator 13 gemäß der beispielhaften Ausführungsform sechs Zahneinrichtung 20. Gemäß alternativer Ausführungen kann der Stator 13 auch mehr oder weniger als sechs Zahneinrichtungen 20 enthalten.

Jede einzelne Zahneinrichtung 20 dient zum Aufnahme einer Spulenwicklung 15 aus einem leitfähigen Draht. Bei dem Werkstoff des leitfähigen Drahts kann es sich um beispielsweise um Kupfer oder eine Kupferlegierung handeln.

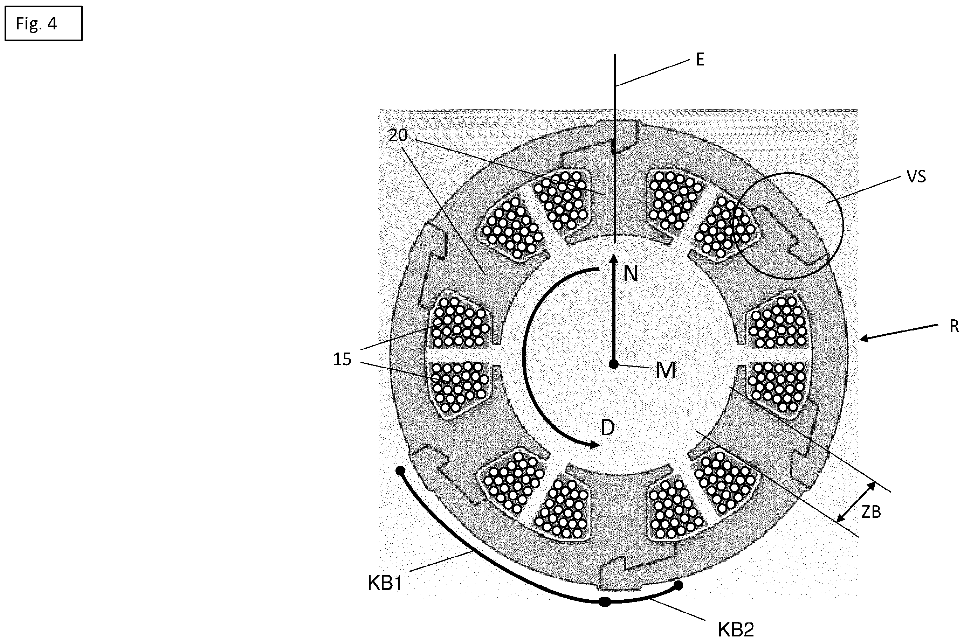

Jede Zahneinrichtung 20 enthält ein Stegelement 16 sowie einen bogenförmigen ersten Ringabschnitt 17 und zweiten Ringabschnitt 18. Wie in den Figuren 3 und 4 zu erkennen ist, formen die einzelnen Ringabschnitte 17, 18 in einem Zusammenschluss einen geschlossenen, kreisförmigen Ring R.

Das Stegelement 16 weist ein erstes Ende 16a und zweites Ende 16b auf, wobei zwischen dem ersten und zweiten Ende 16a, 16b die Spulenwicklung 15 angebracht wird. Das jeweilige erste Ende 16a des Stegelements 16 ist dabei an einer Mantelinnenfläche des von den einzelnen Ringabschnitten 17, 18 entstandenen Rings R positioniert. Das zweite Ende 16b des Stegelements 16 ragt zu einem Mittelpunkt M des Rings R. Die Länge der Stegelemente 16 sind so gewählt, dass eine kreisförmige Aussparung im Innen des Stators 13 verbleibt. In diese Aussparung kann der Rotor 14 platziert werden.

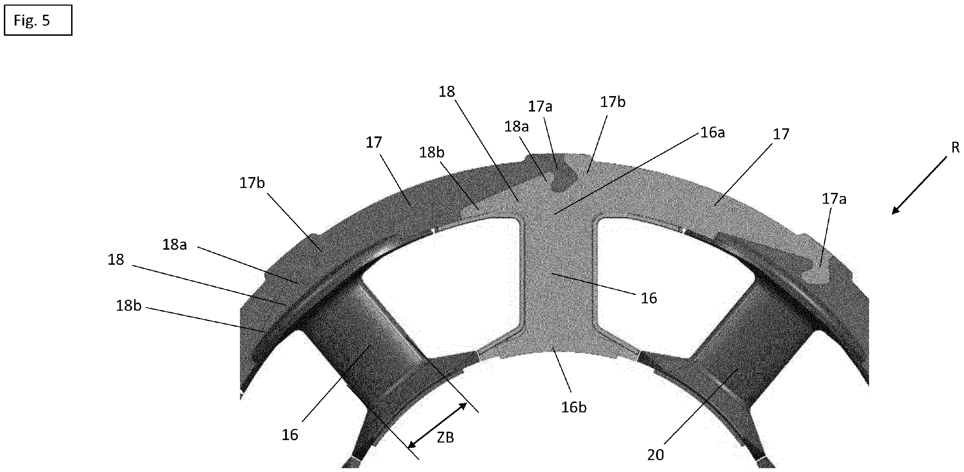

Wie insbesondere in den Figuren 3 und 5 ersichtlich, weist sowohl der erste und zweite Ringabschnitt 17, 18 jeweils ein erstes und zweites Ende 17a, 17b, 18a, 18b auf. Das erste Ende 17a des ersten Ringabschnitts 17 ist dabei an dem ersten Ende 16a des Stegelements 16 positioniert. Das erste Ende 18a des zweiten Ringabschnitts 18 ist ebenfalls an dem ersten Ende 16a des Stegelements 16 positioniert. Die beiden Ringabschnitt 17, 18 erstrecken sich in entgegengesetzte Richtungen um den Ring R. Der erste Ringabschnitt 17 weist einen längeren ersten Kreisbogen KB1 auf als der zweite Kreisbogen KB2 des zweiten Ringabschnitts 18. Mit anderen Worten: der erste Ringabschnitt 17 weist ein größeres Volumen auf als der zweite Ringabschnitt 18. In den dargestellten Ausführungsbeispiel entspricht das Volumen des zweiten Ringabschnitts 18 im Wesentlichen 1/3 oder 30% des Volumens des ersten Ringabschnitts 17.

Gemäß alternativer (in den Figuren nicht gezeigten) Ausführungsbeispielen kann das Volumen des zweiten Ringabschnitts 18 auch mehr oder weniger als 1/3 oder 30% des Volumens des ersten Ringabschnitts 17 entsprechen.

Darüber hinaus ist eine Verbindungsvorrichtung 19 mit einem ersten und zweiten Verbindungselement 19a, 19b an den ersten und zweiten Ringabschnitten 17, 18 vorgesehen. Das erste Verbindungselement 19a ist dabei an dem ersten Ringabschnitt 17 und das zweite Verbindungselement 19b ist an dem zweiten Ringabschnitt 18 positioniert.

In dem vorliegenden Ausführungsbeispiel ist die Verbindungsvorrichtung 19 als Fügeverbindung ausgestaltet. Die als Fügeverbindung ausgestaltete Verbindungsvorrichtung 19 dient dabei zum wiederlösbaren Verbinden der einzelnen Ringabschnitte 17, 18 und damit der einzelnen Zahneinrichtung 20 zu einem durchgehenden ringförmigen Stator 13.

Das erste Verbindungselement 19a an dem ersten Ringabschnitt 17 ist in dem vorliegenden Ausführungsbeispiel in Form eines Haken ausgestaltet. Das zweite Verbindungselement 19b an dem zweiten Ringabschnitt 18 ist wiederum als eine zu dem Haken korrespondierende Aussparung ausgestaltet. Das als Haken ausgestaltete erste Verbindungselement 19a kann mit in das als Aussparung ausgestaltete zweite Verbindungselement 19b eingreifen. Durch diese spezielle Ausgestaltungsform des ersten und zweiten Verbindungselements 19a, 19b kann der erste und zweite Ringabschnitt 17, 18 miteinander verbunden werden.

Entsprechend einer alternativen und in den Figuren nicht gezeigten Ausführungsform kann die Verbindungsvorrichtung 19 auch als Schnappverbindung ausgestaltet sein, wobei ein erster Bestandteil der Schnappverbindung an dem ersten Ringabschnitt 17 und ein zweiter Bestandteil der Schnappverbindung an dem zweiten Ringabschnitt 18 vorgesehen ist.

Gemäß weiterer vorteilhafter Ausführungsformen sind die beiden Ringabschnitte 17, 18 durch eine formschlüssige, kraftschlüssige und/oder stoffschlüssige Verbindung miteinander verbunden.

Wie insbesondere in den Figuren 3 bis 5 erkennbar, liegt die Verbindungsstelle VS bzw. die Fügestelle der Verbindungsvorrichtung 19 ungefähr in einer Ebene durch eine Zahneinrichtung 20. Wie ebenfalls in den Figuren 3 bis 5 gezeigt, ist die Verbindungsstelle VS bzw. die Fügestelle der Verbindungsvorrichtung 19 dabei so ausgestaltete, dass ein relativ großer Anteil der Verbindungsstelle VS bzw. die Fügestelle (oder auch Verbindungslinie) in einer Umlaufsrichtung D verläuft. Gleichzeitig verläuft nur ein relativ kleiner Anteile der Verbindungsstelle VS bzw. die Fügestelle in radialer Richtung N. Durch diese spezielle Ausgestaltung der Verbindungsstelle VS bzw. die Fügestelle an der Verbindungsvorrichtung 19 wird der magnetische Fluss im Stator nur wenig negativ beeinflusst.

### Bezuaszeichen

- 1: Werkzeugmaschine
- 2: Gehäuse der Werkzeugmaschine
- 2a: Oberseite des Gehäuses der Werkzeugmaschine
- 2b: Unterseite des Gehäuses der Werkzeugmaschine
- 2c: vorderes Ende des Gehäuses der Werkzeugmaschine
- 2d: hinteres Ende des Gehäuses der Werkzeugmaschine
- 3: Werkzeugaufnahme
- 4: Handgriff
- 4a: oberes Ende des Handgriffs
- 4b: unteres Ende des Handgriffs
- 4c: Vorderseite des Handgriffs
- 4d: Rückseite des Handgriffs
- 5: Energieversorgung
- 6: Werkzeug
- 7: Betätigungsschalter
- 8: Steuerungseinrichtung
- 9: Werkzeugmaschinenschnittstelle
- 10: Antrieb
- 11: Getriebevorrichtung
- 12: Antriebswelle
- 13: Stator
- 14: Rotor
- 15: Spulenwicklung
- 16: Stegelement
- 16a: erstes Ende des Stegelements
- 16b: zweites Ende des Stegelements
- 17: erster Ringabschnitt
- 17a: erstes Ende des ersten Ringabschnitts
- 17b: zweites Ende des ersten Ringabschnitts
- 18: zweiter Ringabschnitt
- 18a: erstes Ende des zweiten Ringabschnitts
- 18b: zweites Ende des zweiten Ringabschnitts
- 19: Verbindungsvorrichtung
- 19a: erstes Verbindungselement
- 19b: zweites Verbindungselement
- 20: Zahneinrichtung

- E: Ebene
- D: Umlaufsrichtung
- M: Mittelpunkt
- MA: Mittelachse
- N: radiale Richtung
- R: kreisförmiger Ring
- VS: Verbindungsstelle
- KB1: erster Kreisbogen
- KB2: zweiter Kreisbogen
- ZB: Breite der Zahneinrichtung

## Patentansprüche

1. Stator (13) für einen Elektromotor enthaltend wenigstens eine erste und zweite Zahneinrichtung (20) zur jeweiligen Aufnahme einer Spulenwicklung,
**dadurch gekennzeichnet, dass** jede Zahneinrichtung (20) einen bogenförmigen ersten und zweiten Ringabschnitt (17, 18) enthält, und dass der erste Ringabschnitt (17) einen längeren Kreisbogen (KB) aufweist als der zweite Ringabschnitt (18), wobei eine Verbindungsvorrichtung (19) mit einem ersten und zweiten Verbindungselement (19a, 19b) enthalten ist, wobei das erste Verbindungselement (19a) an dem ersten Ringabschnitt (17) und das zweite Verbindungselement (19b) an dem zweiten Ringabschnitt (18) vorgesehen.

2. Stator (13) nach Anspruch 1,
**dadurch gekennzeichnet, dass** das Volumen des zweiten Ringabschnitts (18) im Wesentlichen 1/3 oder 30% des Volumens des ersten Ringabschnitts (17) entspricht.

3. Stator (13) nach Anspruch 1 oder 2,
**dadurch gekennzeichnet, dass** wenigstens eine erste Verbindungsstelle (VS) des ersten und zweiten Verbindungselements (19a, 19b) im Wesentlichen in einer Ebene (E) durch eine Zahneinrichtung (20) liegt.

4. Stator (13) nach wenigstens einem der Ansprüche 1 bis 3,
**dadurch gekennzeichnet, dass** das erste und zweite Verbindungselement (19a, 19b) in einem geschlossenen Zustand wenigstens eine formschlüssige, kraftschlüssige und/oder stoffschlüssige Verbindung zueinander erzeugen.

5. Stator (13) nach wenigstens einem der Ansprüche 1 bis 4,
**dadurch gekennzeichnet, dass** die Verbindungsvorrichtung (19) als Schnappverbindung ausgestaltet ist.

6. Stator (13) nach wenigstens einem der Ansprüche 1 bis 5,
**dadurch gekennzeichnet, dass** die Verbindungsvorrichtung (19) als Fügeverbindung ausgestaltet ist.

7. Stator (13) nach wenigstens einem der Ansprüche 1 bis 6,
**dadurch gekennzeichnet, dass** wenigstens eine erste Trennlinie der Fügeverbindung zwischen dem ersten und zweiten Verbindungselement (19a, 19b) parallel zu einer Mittelachse des Stators (13) verläuft, sodass das erste und zweite Verbindungselement (19a, 19b) gegeneinander und parallel zur Mittelachse des Stators (13) verschiebbar sind.

8. Stator (13) nach wenigstens einem der Ansprüche 1 bis 7,
**dadurch gekennzeichnet, dass** die Wegstrecke der Trennlinie der Fügeverbindung zwischen dem ersten und zweiten Verbindungselement (19a, 19b) länger ist als eine Breite (ZB) einer Zahneinrichtung (20).

9. Stator (13) nach wenigstens einem der Ansprüche 1 bis 8,
**dadurch gekennzeichnet, dass** zwischen dem ersten und zweiten Verbindungselement (19a, 19b) ein elastisch oder plastisch verformbares Kontaktelement vorgesehen ist.

10. Antrieb (10) mit einem Stator (13) nach wenigstens einem der Ansprüche 1 bis 9 enthaltend wenigstens eine erste und zweite Zahneinrichtung (20) zur jeweiligen Aufnahme einer Spulenwicklung (15),
**dadurch gekennzeichnet, dass** jede Zahneinrichtung (20) einen bogenförmigen ersten und zweiten Ringabschnitt (17, 18) enthält, und dass der erste Ringabschnitt (17) einen längeren Kreisbogen (KB) aufweist als der zweite Ringabschnitt (18), wobei eine Verbindungsvorrichtung (19) mit einem ersten und zweiten Verbindungselement (19a, 19b) enthalten ist, wobei das erste Verbindungselement (19a) an dem ersten Ringabschnitt (17) und das zweite Verbindungselement (19b) an dem zweiten Ringabschnitt (18) vorgesehen.
